Europäisches Patentamt

European Patent Office

Office européen des brevets

(19)

(11) Veröffentlichungsnummer: **0 201 763**
**B1**

(12) EUROPÄISCHE PATENTSCHRIFT

(45) Veröffentlichungstag der Patentschrift:
01.03.89

(21) Anmeldenummer: 86105520.0

(22) Anmeldetag: 22.04.86

(51) Int. Cl.⁴: **C08L 69/00**, C08K 3/22,
C08L 51/00
// (C08L69/00, 51:00, 33:16,
23:06),(C08L51/00, 69:00, 33:16,
23:06)

(54) Selbstverlöschende halogenhaltige thermoplastische Formmasse.

(30) Priorität: 25.04.85 DE 3514872

(43) Veröffentlichungstag der Anmeldung:
20.11.86 Patentblatt 86/47

(45) Bekanntmachung des Hinweises auf die Patenterteilung:
01.03.89 Patentblatt 89/9

(84) Benannte Vertragsstaaten:
BE DE FR GB NL

(56) Entgegenhaltungen:
EP-A- 0 111 260
DE-B- 2 527 803
FR-A- 2 512 825

(73) Patentinhaber: BASF Aktiengesellschaft,
Carl-Bosch-Strasse 38, D-6700 Ludwigshafen(DE)

(72) Erfinder: Muench, Volker, Dr., Luitpoldstrasse 114,
D-6700 Ludwigshafen(DE)
Erfinder: Wassmuth, Georg., Dr.,
Von-Sturmfeder-Strasse 60, D-6700 Ludwigshafen(DE)
Erfinder: Mitulla, Konrad, Dr., Schwalbenweg 31,
D-6700 Ludwigshafen(DE)
Erfinder: Echte, Adolf, Dr., Leuschnerstrasse 42,
D-6700 Ludwigshafen(DE)
Erfinder: Hambrecht, Juergen, Dr., Am Klosterwald 31,
D-4400 Muenster-Hiltrup(DE)

## Beschreibung

Die Erfindung betrifft eine selbstverlöschende thermoplastische Formmasse auf der Grundlage von Styrol- und Acrylnitril enthaltenden, mit Polyacrylaten schlagzäh modifizierten Pfropfmisch-Polymerisaten (ASA), Polycarbonaten und Halogen enthaltenden Flammschutzmitteln sowie Synergisten für letztere.

Zum Stand der Technik werden genannt:

(1) DE-PS 1 170 141
(2) DE-PS 1 810 993
(3) DE-OS 3 149 358 = EP-A 81 761
(4) DE-OS 3 210 284 = EP-A 89 540
(5) DE-OS 3 245 292 = EP-A 111 260
(6) DE-OS 3 414 119 = EP-A 161 452
(7) DE-OS 3 436 815 = EP-A 177 875

wobei (6) und (7) zum Prioritätstag noch nicht veröffentlicht waren.

Mischungen aus Polycarbonaten und Styrol- und Acrylnitril enthaltenden schlagzähen Polymerisaten (ABS) sind in (1) und (2) beschrieben. Diese bekannten Formmassen besitzen im allgemeinen zufriedenstellende Eigenschaften. Die 2-stufige Pfropfung von ASA-Polymerisaten ist aus (3) bekannt und in (5) sind Mischungen aus ASA-Polymerisaten, die eine 2-stufige Pfropfhülle aufweisen, und Polycarbonaten (PC) beschrieben. Die in (4) beschriebene Masse aus PC und ASA weist zusätzlich ein Acrylatcopolymerisat auf.

In (6) sind Mischungen aus PC und ASA beschrieben, wobei die Pfropfung des Acrylatkautschuks 2-stufig erfolgt und Methylmethacrylat zusätzlich zu Styrol und AN beim Aufbau der Pfropfhülle verwendet wird.

In (7) schließlich werden PC/ASA-Mischungen vorgestellt, bei denen der Acrylatkautschuk in 3 Verfahrensstufen gepfroft worden ist.

Die aus (1) oder (2) bekannten Formmassen auf Basis vom PC und ABS zeigen eine nicht-homogene Verteilung der Weichphase und eine geringe Bindenahtfestigkeit, bei insgesamt niedriger multiaxialer Schlagzähigkeit.

Häufig wird eine höhere Zähigkeit und eine bessere, homogenere Verteilung der Weichphase, verbunden mit einer Verfestigung von Bindenähten bei aus diesen Massen hergestellten Formteilen verlangt. So weisen die z.B. aus (4) oder (5) bekannten Formmassen eine ungenügende Zähigkeit in der Kälte, insbesondere eine unzureichende multiaxiale Schlagzähigkeit auf.

Die unter (1) bis (5) beschriebenen Formmassen besitzen keine flammhemmenden, selbstverlöschenden Eigenschaften.

Die Flammfestausrüstung thermoplastischer Kunststoffe mit Halogen enthaltenden organischen Verbindungen zusammen mit Metall oder Nichtmetall enthaltenden Verbindungen (Synergisten) ist an sich bekannt und z.B. in Vogel, "Flammfestmachen von Kunststoffen", Hüthig-Verlag (1966), Seiten 94 bis 102; Troitzsch, "Brandverhalten von Kunststoffen", Hanser-Verlag (1982), Seiten 1 bis 65 und Hirschler, "Developments in Polymer Stabilization", Band 5, Editor G.Scott, Applied Science Publishers, London (1982), Seiten 107 bis 151, beschrieben. Es ist ferner bekannt, daß auch Blends, bestehend aus Poly(carbonaten) und schlagzäh modifizierten Styrolcopolymeren in dieser Weise flammfest ausgerüstet werden können (vgl. DE-OS 3 002 662). Es zeigt sich jedoch, daß die aus (1) bis (6) bekannten Mischungen zwar flammhemmend ausgerüstet werden können, daß dann aber die mechanischen und thermischen Eigenschaften der Blends darunter in nicht tolerierbarem Maße leiden.

Es ist nun ferner bekannt, daß durch den Einsatz mehrfach gepfropfter Poly(acrylat)kautschuke mit Acrylsäureestern in der letzten Pfropfstufe ein entscheidender Fortschritt gegenüber dem Stand der Technik erzielt wird [vgl. (7)]. Dies betrifft zum einen die mechanischen, thermischen, rheologischen und selbstverlöschenden Eigenschaften der Blends aus Poly(carbonat) und ASA, und zum anderen wird die Auswahl an einsetzbaren Flammschutzmitteln breiter. Ein entscheidender Nachteil ist aber die zur Herstellung der Blends notwendige Dreifachpfropfung des Poly(acrylat)kautschuks, welche aufwendig ist.

Es besteht daher immer noch die Aufgabe, eine befriedigende Flammfestausrüstung von Mischungen aus ASA und Polycarbonat vorzuschlagen, bei denen für die Erhaltung des mechanischen, thermischen und rheologischen Eigenschaftsprofils keine zusätzlichen Verfahrensschritte notwendig sind.

Diese Aufgabe wird durch die im Patentanspruch 1 beschriebene Formmasse gelöst.

Die Erfindung betrifft daher eine halogenhaltige, selbstverlöschende thermoplastische Formmasse, enthaltend, jeweils bezogen auf die Formmasse aus A, B, C und D,

A mindestens 30 Gew.-% mindestens eines Polycarbonats,

B mindestens 20 Gew.-% mindestens eines Mischpolymerisats das besteht aus

$b_1$) mindestens einem Elastomeren (Kautschuk) in einem Anteil von 1 bis 60 Gew.-%, bezogen auf B, wobei dieses Elastomere einpolymerisiert enthält, jeweils bezogen auf $b_1$)

$b_{1a_1}$) 50 bis 95,9 Gew.-% mindestens eines Alkylacrylates mit 1 bis 8 C-Atomen im Alkylrest,

$b_{1a_2}$) 0 bis 50 Gew.-% eines copolymerisierbaren Monomeren aus der Gruppe von Butadien, Isopren, Styrol, Acrylnitril und Vinylmethylether und deren Mischungen

und

b₁a₃) 0,1 bis 5 Gew.-% eines polyfunktionellen, vernetzend wirkenden Monomeren

b₂) einer durch sukzessive Polymerisation in ein oder höchstens zwei Verfahrensschritten auf das Elastomere gepfropften Hülle aus einem vinylaromatischen Monomeren mit 8 bis 12 C-Atomen und Acrylnitril im Gewichtsverhältnis 90:10 bis 60:40, wobei die Hülle 5 bis 40 Gew.-%, bezogen auf B, ausmacht, sowie

b₃) mindestens einem Copolymerisat (Hartmatrix) aus einem vinylaromatischen Monomeren mit 8 bis 12 C-Atomen und Acrylnitril im Gewichtsverhältnis 90:10 bis 60:40, in einem Anteil von 20 bis 94 Gew.-%, bezogen auf B,

C: 5 bis 15 Gew.-% mindestens einer Halogen enthaltenden organischen Verbindung (Flammschutzmittel),

D: 2 bis 10 Gew.-% Antimonoxid (Synergist).

Die Erfindung ist dadurch gekennzeichnet, daß als Flammschutzmittel C Poly(pentabrombenzylacrylat) mit einem Erweichungspunkt von 205 bis 215°C und als Synergist ein Konzentrat von Sb₂O₃ in Polyethylen mit 75 bis 95 Gew.-% Sb₂O₃ angewendet werden.

Poly(pentabrombenzylacrylat) ist eine an sich bekannte Verbindung, deren Darstellung beispielsweise in SU-PS 732 281, BE-PS 860 173, DE-PS 2 527 802, DE-PS 2 920 085 und NL-PS 7 606 647 beschrieben wird.

Das Produkt wird ferner von Eurobrom unter der Markenbezeichnung ®FR 1025 vertrieben. Eurobrom empfiehlt FR 1025 in seiner Firmenschrift als geeignet für den Einsatz als Flammschutzmittel in Poly(estern) und Poly(amiden). Ferner ist in folgenden Druckschriften der Einsatz dieses und ähnlicher Flammschutzmittel in Polymeren beschrieben: J5 900 6248-A, GB-PS 2 105 351, BE-PS 875 377, DE-PS 3 234 589, GB-PS 2 098 231, DE-PS 2 943 535, DE-PS 2 527 803 und NL-PS 7 606 647.

Insbesondere in der BE-PS 860 173 und in der NL-Anmeldung 7 606 647 wird das genannte Poly(pentabrombenzylacrylat) als Flammschutzmittel für folgende Stoffgruppen vorgeschlagen: Poly(ester), ABS, Poly(carbonate), Poly(acetale) oder Poly(urethane).

Es hat sich jedoch gezeigt, und Vergleichsversuche belegen dies, daß Poly(pentabrombenzylacrylat) die Kerbschlagzähigkeit und die Bruchenergie von ASA in beträchtlichem Ausmaß schädigt. Es ist daher überraschend, daß dieses Flammschutzmittel, ausgewählt aus einer Vielzahl von Halogen, insbesondere Brom enthaltenden Verbindungen, in Mischungen aus ASA und Poly(carbonat) keine schädigende Wirkung aufweist. Dies ist umso mehr überraschend, als andere Flammschutzmittel, welche die mechanischen Eigenschaften von ASA nicht schädigen, gerade dies bei Mischungen aus ASA und Poly(carbonaten) tun. Auch dies wird durch Vergleichsversuche belegt. Der Vorschlag, Poly(pentabrombenzylacrylat) für die Flammfestausrüstung von Blends aus ASA und PC zu verwenden, war daher nicht naheliegend.

Hinzu kommt noch folgendes:

Die erfindungsgemäße Formmasse enthält Sb₂O₃ in Form eines an sich bekannten 90%igen Konzentrates in Poly(ethylen). Poly(ethylen) ist nun bekanntermaßen sowohl mit ASA als auch mit Poly(carbonat) unverträglich. Es war daher zu befürchten, daß der Einsatz dieses Konzentrates die Eigenschaften der Mischung verschlechtert.

Nachstehend wird der Aufbau der erfindungsgemäßen Formmasse aus den Komponenten A bis D, deren Art bzw. Herstellung und die Herstellung der Formmasse beschrieben.

Die erfindungsgemäße Formmasse enthält bzw. besteht vorzugsweise, bezogen auf die Summe der Komponenten A + B + C + D, die gleich 100 ist, aus

A mindestens 30 Gew.-%, vorzugsweise 40 bis 60 Gew.-%
B mindestens 20 Gew.-%, vorzugsweise 30 bis 50 Gew.-%
C 15 bis 5 Gew.-%, vorzugsweise 10 bis 7 Gew.-%
D 10 bis 2 Gew.-%, vorzugsweise 3 bis 7 Gew.-%.

Ferner kann die Formmasse noch übliche Zusatzstoffe E in Mengen von jeweils 0,1 bis 0,5 Gew.-Teilen, bezogen auf 100 Gew.-Teile der Formmasse aus A, B, C und D, aufweisen. Die Art und Menge der Zusatzstoffe ist insbesondere vom Verwendungszweck der Formmasse bzw. den Verarbeitungsbedingungen abhängig.

Komponente A

Unter Polycarbonaten A im Sinne der erfindungsgemäßen Formmasse sollen Polycarbonate auf der Basis von Homopolycarbonaten und Copolycarbonaten verstanden werden. Als Bisphenole kommen dabei beispielsweise in Frage: Dihydroxydiphenyle, Bis-(hydroxyphenyl)alkane, Bis-(hydroxyphenyl)ether. Es können aber auch alle anderen, für die Herstellung von Polycarbonaten geeigneten Bisphenole eingesetzt werden, wie sie u.a. in der Monographie H.Schnell, Chemistry and Physics of Polycarbonates, Interscience Publishers, New York, 1964, in der US-PS 2 999 835 und in der DE-OS 2 248 817 beschrieben sind. Besonders bevorzugt sind Polycarbonate auf der Basis von 2,2-Bis-(4-hydroxyphenyl)-propan. Die Synthese der Polycarbonate wird beispielsweise in der US-PS 2 999 835 und der GB-PS 772 627 beschrieben. Die Komponente A weist relative Viskositäten $\eta$spec/c im Bereich von 1,1 bis 1,5 [ml/g] auf, entsprechend mittleren Molgewichten $\overline{M}_n$ im Bereich von 25 000 bis 200 000.

Komponente B

Die Komponente B stellt mindestens ein Mischpolymerisat dar, welches aufgebaut ist aus einem Pfropfmischpolymerisat [Weichkomponente ($b_1 + b_2$)] und einer Hartkomponente ($b_3$); es ist aus insgesamt 3 Teilen aufgebaut bzw. besteht aus diesen.
Diese sind:

$b_1$) ein Elastomeres (Kautschuk), das in einem Anteil von 1 bis 60 Gew.-%, vorzugsweise von 5 bis 50 Gew.-% und insbesondere von 10 bis 40 Gew.-%, jeweils bezogen auf B, vorhanden ist und eine Einfriertemperatur von weniger als 0°C, vorzugsweise von weniger als –30°C, aufweist und
$b_2$) eine durch sukzessive Polymerisation in ein oder höchstens zwei Verfahrensschritten auf das Elastomere aufgepfropfte Hülle, die 5 bis 40, vorzugsweise 10 bis 35, insbesondere 15 bis 28 Gew.-%, jeweils bezogen auf B, ausmacht
sowie
$b_3$) ein Copolymerisat aus einem vinylaromatischen Monomeren mit 8 bis 12 Kohlenstoffatomen und von Acrylnitril (Gewichtsverhältnis vinylaromatisches Monomer/Acrylnitril 90:10 bis 60:40), das 20 bis 94, vorzugsweise 30 bis 80, insbesondere 40 bis 70 Gew.-%, jeweils bezogen auf B, ausmacht.

Als Monomere für die Herstellung des Elastomeren kommen in Betracht [Summe $b_1a_1$) + $b_1a_2$) + $b_1a_3$) = 100]:

$b_1a_1$) 50 bis 99,9 Gew.-%, vorzugsweise 70 bis 99 Gew.-%, insbesondere 95 bis 99,9 Gew.-%, bezogen auf $b_1$), mindestens eines Alkylacrylates mit 1 bis 8 C-Atomen im Alkylrest, vorzugsweise werden n-Butylacrylat und/oder 2-Ethyl-hexylacrylat einpolymerisiert. Bevorzugt ist n-Butylacrylat.
$b_1a_2$) Gegebenenfalls kann das elastomere Polymerisat $b_1$) auch noch bis zu 50, insbesondere 10 bis 20 Gew.-%, jeweils bezogen auf $b_1$), eines weiteren copolymerisierbaren Monomeren wie Butadien, Isopren, Styrol, Acrylnitril oder Vinylmethylether oder Mischungen davon einpolymerisiert enthalten.
$b_1a_3$) Um die bevorzugten vernetzten Acrylsäureester-Polymerisate zu erhalten, wird die Polymerisation der Acrylsäureester in Gegenwart von 0,1 bis 5 Gew.-%, vorzugsweise von 1 bis 4 Gew.-%, bezogen auf die bei der Herstellung der Pfropfgrundlage eingesetzten gesamten Monomeren, eines copolymerisierbaren, polyfunktionellen, vorzugsweise bifunktionellen, die Vernetzung bewirkenden Monomeren $b_1a_3$) durchgeführt. Als solche bi- oder polyfunktionellen Vernetzungs-Monomeren $b_1a_3$) eignen sich Monomere, die vorzugsweise zwei, gegebenenfalls auch mehr, zur Copolymerisation befähigte ethylenische Doppelbindungen enthalten, die nicht in den 1,3-Stellungen konjugiert sind. Geeignete Vernetzungsmonomere sind beispielsweise Divinylbenzol, Diallylmaleat, Diallylfumarat oder Diallylphthalat. Als besonders günstiges Vernetzungsmonomeres hat sich der Acrylsäureester des Tricyclodecenylalkohols erwiesen (vgl. DE-PS 1 260 135).

Besonders bevorzugt werden somit Elastomere $b_1$), die nur die Monomeren $b_1a_1$) und $b_1a_3$) in den vorstehend genannten Bereichen einpolymerisiert enthalten.
Das Elastomere $b_1$) stellt somit vorzugsweise ein vernetztes Homopolymerisat oder ein Copolymerisat von Acrylestern dar bzw. es besteht daraus.
Die Herstellung der Weichkomponente ($b_1 + b_2$) ist an sich bekannt und kann beispielsweise nach den in der DE-PS 1 260 135 und DE-OS 2 826 925 beschriebenen Methoden erfolgen oder man kann das Produkt im Handel erhalten.

Herstellung des Elastomeren $b_1$)

Das Elastomer, die Pfropfgrundlage $b_1$), wird hergestellt, indem der oder die Acrylsäureester ($b_1a_2$) und das polyfunktionelle, die Vernetzung bewirkende Monomere ($b_1a_3$) gegebenenfalls zusammen mit den weiteren Comonomeren $b_1a_2$) in wäßriger Emulsion in an sich bekannter Weise bei Temperaturen von 20 bis 100°C, vorzugsweise von 50 bis 80°C copolymerisiert werden. Es können die üblichen Emulgatoren wie Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen verwendet werden. Vorzugsweise nimmt man die Natriumsalze von Alkylsulfonaten oder Fettsäuren mit 10 bis 18 Kohlenstoffatomen. Es ist günstig, die Emulgatoren in Mengen von 0,5 bis 5 Gew.-%, insbesondere von 1 bis 2 Gew.-%, bezogen auf die bei der Herstellung der Pfropfgrundlage ($b_1$) eingesetzten Monomeren, einzusetzen. Im allgemeinen wird bei einem Wasser- zu Monomeren-Verhältnis von 2:1 bis 0,7:1 gearbeitet. Als Polymerisationsinitiatoren dienen insbesondere die gebräuchlichen Persulfate wie Kaliumpersulfat, es können jedoch auch Redox-Systeme zum Einsatz gelangen. Die Initiatoren werden im allgemeinen in Mengen von 0,1 bis 1 Gew.-%, bezogen auf die bei der Herstellung der Pfropfgrundlage ($b_1$) eingesetzten Monomeren, eingesetzt. Als weitere Polymerisationshilfsstoffe können die üblichen Puffersubstanzen, durch welche pH-Werte von vorzugsweise 6 bis 9 eingestellt werden – z.B. Natriumbicarbonat und Natriumpyrophosphat –, sowie 0 bis 3 Gew.-% eines Molekulargewichtsreglers – wie Mercaptane, Terpinole oder dimeres $\alpha$-Methylstyrol – bei der Polymerisation verwendet werden.

Die genauen Polymerisationsbedingungen, insbesondere Art, Dosierung und Menge des Emulgators, werden innerhalb der oben angegebenen Bereiche im einzelnen so bestimmt, daß der erhaltene Latex des vernetzten Acrylsäureester-Polymerisats einen $d_{50}$-Wert im Bereich von etwa 50 bis 700 nm, vorzugsweise im Bereich von 80 bis 600 nm besitzt. Die Teilchengrößen-Verteilung des Latex soll dabei vorzugsweise eng sein. Der Quotient $Q = (d_{90} - d_{10})/d_{50}$ soll kleiner als 0,5, vorzugsweise kleiner als 0,35 sein.

Herstellung der Pfropfhülle $b_2$)

Bei der Pfropfhülle $b_2$) handelt es sich um eine in einem oder höchstens zwei Verfahrensschritten hergestellte Hülle.

Einstufige Pfropfung $b_2a_1$)

Die einstufig erzeugte Pfropfhülle $b_2a_1$) enthält, einpolymerisiert in einem Verfahrensschritt, ein Copolymerisat aus einem vinylaromatischen Monomeren mit 8 bis 12 C-Atomen und Acrylnitril (Gewichtsverhältnis vinylaromatisches Monomer/Acrylnitril 90:10 bis 60:40). Dasselbe gilt auch für die Bruttozusammensetzung der in zwei Schritten erzeugten Hülle.

Zur Herstellung der Pfropfhülle $b_2$) und damit der Weichkomponente ($b_1 + b_2$) wird in Gegenwart des Latex des vernetzten Acrylesterpolymerisats $b_1$) ein Monomerengemisch aus mindestens einem vinylaromatischen Monomeren ($b_2a_1$) mit 8 bis 12 Kohlenstoffatomen und Acrylnitril ein- bzw. aufpolymerisiert. Beispiele für Monomere ($b_2a_1$) sind Styrol, $\alpha$-Methylstyrol und kernalkylierte Styrole, wie p-Methylstyrol und tert.-Butylstyrol. Besonders bevorzugt werden Styrol, $\alpha$-Methylstyrol und p-Methylstyrol eingesetzt. Es ist vorteilhaft, die Pfropfmischpolymerisation von bevorzugt z.B. Styrol und Acrylnitril auf das als Pfropfgrundlage dienende vernetzte Polyacrylsäureester-Polymerisat $b_1$) in wäßriger Emulsion unter den üblichen, vorstehend aufgeführten Bedingungen bis zum praktisch vollständigen Verbrauch der Monomeren ($b_2a_1$) und von Acrylnitril durchzuführen. Die Pfropfmischpolymerisation kann zweckmäßig im gleichen System erfolgen wie die Emulsionspolymerisation zur Herstellung der Pfropfgrundlage $b_1$), wobei, falls notwendig, weiterer Emulgator und Initiator zugegeben werden kann. Das aufzupfropfende vinylaromatische Monomere, insbesondere Styrol, sowie Acrylnitril, können dem Reaktionsgemisch auf einmal, absatzweise in mehreren Stufen oder vorzugsweise kontinuierlich während der Polymerisation zugegeben werden. Die Pfropfmischpolymerisation des Styrols und des Acrylnitrils in Gegenwart des vernetzten Acrylsäureester-Polymerisats wird so geführt, daß ein Pfropfgrad von 5 bis 40, vorzugsweise von 10 bis 25, im Pfropfmischpolymerisat ($b_1+b_2a_1$) resultiert.

Zweistufige Pfropfung ($b_2a_2 + b_2a_3$)

Zur Herstellung einer zweistufigen Pfropfhülle $b_2$) werden in einem ersten Verfahrensschritt 10 bis 60, vorzugsweise 15 bis 50, insbesondere 20 bis 40 Gew.-%, jeweils bezogen auf $b_2$), an vinylaromatischen Monomeren bis zum praktisch vollständigen Umsatz aufpolymerisiert. In Frage kommen die oben genannten vinylaromatischen Monomeren $b_2a_1$). Die Verfahrensweise gleicht der unter der einstufigen Pfropfung ($b_2a_1$) beschriebenen.

In einer zweiten Verfahrensstufe wird dann die Pfropfmischpolymerisation mit einem Monomerengemisch ($b_2a_3$), welches 90 bis 40, vorzugsweise 50 bis 85 und insbesondere 55 bis 75 Gew.-%, bezogen auf die Pfropfhülle $b_2$) ausmacht, wieder bis zum praktisch vollständigen Umsatz fortgesetzt. Bei dem Monomerengemisch handelt es sich um die obengenannten vinylaromatischen Monomeren $b_2a_1$) und Acrylnitril in einem Gewichtsverhältnis von 90:10 bis 60:40. Auch der zweite Verfahrensschritt der Pfropfmischpolymerisation wird zweckmäßigerweise im gleichen Emulsions-System durchgeführt, dabei kann, falls notwendig, weiterer Emulgator und Initiator zugegeben werden. Das aufzupfropfende Monomeren-Gemisch, bevorzugt wird eine Mischung aus Styrol und Acrylnitril, kann dem Reaktionsgemisch auf einmal, absatzweise in mehreren Stufen oder vorzugsweise kontinuierlich während der Polymerisation zugegeben werden. Die Pfropfmischpolymerisation des Gemischs von Styrol und Acrylnitril in Gegenwart des vernetzten Acrylsäureester-Polymerisats wird so ausgeführt, daß ein Pfropfgrad von 15 bis 50, vorzugsweise von 20 bis 45, im Pfropfmischpolymerisat ($b_1 + b_2a_2 + b_2a_3$) resultiert.

Unter Pfropfgrad im Sinne der vorliegenden Erfindung ist dabei das Verhältnis der Pfropfmonomeren zu dem Pfropfmischpolymerisat, d.h.

$$\frac{b_2}{b_1 + b_2} \cdot 100 \text{ zu verstehen}$$

d.h. z.B. für die 1. Stufe $\dfrac{b_2a_2}{b_1 + b_2a_1} \cdot 100$

für die 2. Stufe $\dfrac{b_2a_2}{b_1 + b_2a_1 + b_2a_2} \cdot 100$ usw.

Anzumerken ist, daß der Pfropfgrad insbesondere bei schichtweisem Aufbau nur während der Herstellung des Pfropfmischpolymerisats bestimmt (eingestellt) werden kann.

Das Pfropfmischpolymerisat ($b_1+b_2$) weist mittlere Teilchengrößen von 100 bis 750 nm ($d_{50}$-Wert) auf. Die Bedingungen bei der Herstellung des Elastomeren $b_1$) und bei der Pfropfung sind daher so zu wählen, daß Teilchengrößen in diesem Bereich resultieren. Maßnahmen hierzu sind bekannt und z.B. in der DE-PS 1 260 135 und der DE-OS 2 826 925 sowie in Journal of Applied Polymer Science, Vol. 9 (1965), S. 2929 bis 2938 beschrieben. Die Teilchenvergrößerung des Latex des Elastomeren kann aber auch z.B. mittels Agglomeration bewerkstelligt werden.

Zu der Weichkomponente B zählen auch die bei der Pfropfmischpolymerisation zur Herstellung der Komponente $b_2$) entstehenden freien, nicht gepfropften $b_2a_1$)-, $b_2a_2$)- und $b_2a_3$)-enthaltenden Homo- und Copolymerisate. Je nach den bei der Pfropfmischpolymerisation für die Herstellung des Pfropfmischpolymerisats ($b_1 + b_2$) gewählten Bedingungen kann es möglich sein, daß bei der Pfropfmischpolymerisation ein geringer Anteil an solchen (Co-)Polymerisaten gebildet wird.

Als Pfropfmischpolymerisate ($b_1 + b_2$) kommen insbesondere in Frage:

1. 60 Gew.-Teile (98% Butylacrylat/2% Dicyclopentadienylacrylat) + 40 Gew.-Teile (75% Styrol/25% Acrylnitril) als Pfropfhülle;

2. 60 Gew.-Teile (98% Butylacrylat/2% Dicyclopentadienylacrylat) + 5 Gew.-Teile Styrol (1. Pfropfstufe) + 35 Gew.-Teile (75% Styrol/25% Acrylnitril) (2.Pfropfstufe);

3. 60 Gew.-Teile (98% Butylacrylat/2% Dicyclopentadienylacrylat) + 13 Gew.-Teile Styrol (1. Pfropfstufe) + 27 Gew.-Teile (75% Styrol/25% Acrylnitril) (2. Pfropfstufe).

Ganz besonders bevorzugt eingesetzt wird das unter 3. beschriebene Pfropfmischpolymerisat.

Aufbau von $b_3$

Die Komponente $b_3$), das Copolymerisat, ist eine nicht elastomere Hartkomponente, die aus mindestens einem vinylaromatischen Monomeren mit 8 bis 12 C-Atomen und Acrylnitril aufgebaut ist.

Als vinylaromatische Monomere, die in einer Menge von 60 bis 90 Gew.-%, insbesondere von 65 bis 80 Gew.-%, bezogen auf $b_3$), angewendet werden, kommen in Betracht: Styrol und seine Derivate, insbesondere die Alkylderivate, wie α-Methylstyrol bzw. p-Methylstyrol. Bevorzugt werden das Styrol und, falls wärmeformbeständige Formmassen angestrebt werden, dessen Alkylderivate angewendet.

Das Acrylnitril wird in einer Menge von 40 bis 10 Gew.-%, insbesondere von 35 bis 20 Gew.-%, bezogen auf $b_3$), angewendet.

Die bevorzugt als $b_3$ verwendeten Styrol/Acrylnitril-Copolymerisate sind im Handel erhältlich und können z.B. nach der Lehre der DE-AS 1 001 001 bzw. DE-PS 1 003 436 hergestellt werden. Der Molekulargewichtsbereich der Copolymerisate kann $\bar{M}_w = 10^5$ bis $\bar{M}_w = 2,5 \cdot 10^5$ (Gewichtsmittel $\bar{M}_w$ aus Lichtstreuung) betragen.

In den erfindungsgemäßen Formmassen beträgt das Gewichtsverhältnis $b_3 : (b_1 + b_2)$ = 40:60 bis 60:40, vorzugsweise aber 50:50.

Komponente C

Als Flammschutzmittel wird aus der Vielzahl der auf dem Markt erhältlichen Halogen-Verbindungen das Poly(pentabrombenzylacrylat) verwendet. Es weist folgende Spezifikation auf: Erweichungsbereich 205 bis 215°C; Bromgehalt 70 bis 71 Gew.-%. Eingesetzt wird ®FR 1025 von Eurobrom. Dessen Polymerisationsgrad ist wegen der schlechten Löslichkeit nicht bekannt.

Komponente D

Als Synergist wird $Sb_2O_3$ in Form eines an sich bekannten handelsüblichen 90%igen Konzentrates in Poly(ethylen) eingesetzt. Das Poly(ethylen) weist folgende Spezifikation auf: Melt flow index "MFI" bei 190°C mit einer Auflagekraft von 21,6 kp, 20 g/10 min; Molgewicht $\bar{M}_w$ 190.000 (bestimmt durch die Gelpermeationschromatographie). Unter Konzentrat im Sinne der vorliegenden Erfindung wird die Dispersion von $Sb_2O_3$-Pulver in Polyethylen verstanden, wobei 75 bis 95 Gew.-% $Sb_2O_3$, vorzugsweise 85 bis 12 Gew.-% $Sb_2O_3$ vorliegt.

Komponente E

Die erfindungsgemäße Formmasse kann ferner übliche Zusatzstoffe enthalten (Komponente E). Als Zusatzstoffe kommen bekannte und bewährte Stabilisatoren wie sterisch gehinderte Phenole und organische Phosphite in Betracht.

Ferner können Schwefel und/oder Schwefel enthaltende Antioxidantien wie Dithiocarbamatkomplexe, Xanthogensäuresalze, Thiazole und Zinksalze von Mercaptobenzimidazolen in üblichen Mengen von jeweils 0,01 bis 0,5 Gew.-Teilen, bezogen auf 100 Gew.-Teile der Formmasse aus A + B + C + D, eingesetzt werden.

Ferner sind anwendbar Füllstoffe, Farbpigmente, Gleitmittel, Weichmacher, Antistatika oder Treibmittel, weitere metallfreie Synergisten wie Triphenylphosphat, Triphenylphosphinoxid in üblichen, dem Fachmann bekannten Mengen.

Besonders bevorzugt eingesetzt werden Phthalsäureester wie ®Pluriol PE 3100 ($E_1$) und Tris(nonylphenyl)phosphit (TNPP) ($E_2$).

Herstellung der erfindungsgemäßen Formmasse

Das Mischen der Komponenten A, B, C, D und gegebenenfalls E der erfindungsgemäßen Formmasse kann nach allen bekannten Methoden erfolgen. Vorzugsweise geschieht jedoch das Mischen der Komponenten A, B, C, D und gegebenenfalls E durch gemeinsames Extrudieren, Kneten oder Verwalzen der Komponenten, wobei die Komponenten notwendigenfalls zuvor aus der bei der Polymerisation erhaltenen Lösung oder aus der wäßrigen Dispersion isoliert worden sind. Die in wäßriger Dispersion erhaltenen Produkte der Pfropfmischpolymerisation [Komponente ($b_1 + b_2$)] können aber auch teilweise entwässert oder direkt als Dispersion mit der Komponente $b_3$) und dann mit den Komponenten A, C, D und gegebenenfalls E vermischt werden, wobei dann während des Vermischens die vollständige Trocknung des Pfropfmischpolymerisates ($b_1 + b_2$) erfolgt.

Eine bevorzugte Herstellung der erfindungsgemäßen Formmasse erfolgt z.B. dadurch, daß eine Schmelze des Polycarbonats (Komponente A) mit der Komponente B bei Temperaturen über 200°C intensiv vermischt wird. Sie kann auch dadurch erfolgen, daß man eine Schmelze der Polymerisate A mit einem gefällten Pfropfmischpolymerisat ($b_1 + b_2$), das einen Restwassergehalt von 10 bis 40 Gew.-% aufweist, bei Temperaturen über 180°C intensiv vermischt, oder daß man die Schmelze mit einer Dispersion des Pfropfkautschuks ($b_1 + b_2$), die einen Feststoffgehalt von 40 bis 70 Gew.-% aufweist, bei Temperaturen über 180°C intensiv vermischt und wobei jeweils anschließend die Komponente $b_3$), C, D und gegebenenfalls E beigegeben werden.

Die erfindungsgemäße Formmasse kann nach den bekannten Verfahren der Thermoplastverarbeitung bearbeitet werden, also z.B. durch Extrudieren, Spritzgießen, Kalandrieren, Hohlkörperblasen, Pressen oder Sintern; besonders bevorzugt werden aus den nach dem erfindungsgemäßen Verfahren hergestellten Formmassen Formteile durch Spritzgießen für den Automobilbau hergestellt.

Es hat sich überraschenderweise gezeigt, daß die erfindungsgemäße Formmasse zusätzlich zu guten Verarbeitungseigenschaften ausgezeichnete Kerbschlagzähigkeiten und eine gute Festigkeit bei der multiaxialen Schlagbeanspruchung (Fallrohrtest), eine hohe Wärmeformbeständigkeit und selbstverlöschende Eigenschaften aufweist.

Es zeigt sich auch, daß die Schlagzähigkeit nach Bewitterung auf einem hohen Endniveau verbleibt und die Formmassen danach trotz Bewitterungsschädigung keinen Bruch aufweisen. Ferner weisen die Verarbeitungsmaschinen keine Formbeläge auf.

Die in der vorliegenden Anmeldung beschriebenen Parameter wurden wie folgt bestimmt:

1. Die mittlere Teilchengröße und die Teilchengrößenverteilung wurde aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 (1972), Seiten 82 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung er-

7

gebenden $d_{10}$- und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, daß sie auf 10 bzw. 90 Gew.-% der Teilchen bezogen sind. Der Quotient

$$\frac{d_{90} - d_{10}}{d_{50}} = Q$$

stellt ein Maß für die Verteilungsbreite der Teilchengröße dar.

2. Die Kerbschlagzähigkeit $a_k$ in [kJ/m²] wurde nach DIN 53 453 an bei 250°C gespritzten Normkleinstäben bei 23°C gemessen. Die Schlagzähigkeiten von Vergleichsproben und von Proben der erfindungsgemäßen Formmassen sind in der Tabelle zusammengefaßt.

3. Die Bruchenergie $E_{Br}$ in [Nm] wurde mit Hilfe des Fallrohrtestes nach DIN 53 443 an bei 250°C gespritzten Rundscheiben bei 23°C bestimmt.

4. Die Molgewichtsbestimmung der Polycarbonate erfolgt aufgrund der Messung der relativen Viskosität in 0,5%iger Methylenchloridlösung bei 23°C.

5. Die Wärmeformbeständigkeit nach Vicat [in °C] wurde gemäß DIN 53 460 bestimmt.

6. Die Flammschutzprüfung erfolgt im vertikalen Brandtest nach den Vorschriften der Underwriter Laboratories zwecks Einordnung in eine der Brandklassen UL 94 VO, V1 oder V2.

Die Einstufung eines flammgeschützten Thermoplasten in die Brandklasse UL 94 VO erfolgt, wenn folgende Kriterien erfüllt sind: Bei einem Satz von 5 Proben der Abmessungen 127 x 12,7 x 3,16 mm dürfen alle Proben nach zweimaliger Beflammung von 10 sec Zeitdauer mit einer offenen Flamme (Höhe 19 mm) nicht länger als 10 sec nachbrennen. Die Summe der Nachbrennzeiten bei 10 Beflammungen von 5 Proben darf nicht größer sein als 50 sec. Es darf kein brennendes Abtropfen, vollständiges Abbrennen oder ein Nachglühen von länger als 30 sec erfolgen. Die Einstufung in die Brandklasse UL 94 V1 erfordert, daß die Nachbrennzeiten nicht länger als 30 sec sind und daß die Summe der Nachbrennzeiten von 10 Beflammungen von 5 Proben nicht größer als 250 sec ist. Das Nachglühen darf nie länger als 60 sec dauern. Die übrigen Kriterien sind identisch mit den oben erwähnten. Eine Einstufung in die Brandklasse UL 94 V2 erfolgt dann, wenn es bei Erfüllung der übrigen Kriterien zur Einstufung UL 94 V1 zu brennendem Abtropfen kommt.

Zur Durchführung der in den Beispielen beschriebenen Versuche und von Vergleichsversuchen wurden die nachfolgend beschriebenen Stoffe eingesetzt:

I. Als Komponente A wurde ein im Handel erhältliches Polycarbonat auf der Basis von 2,2-Bis-(4-hydroxiphenyl)propan mit einer Grenzviskosität von 0,55 [dl/g] eingesetzt.

II. Als Komponente B wurde folgende Mischung verwendet:

a) 50 Gew.-% eines Pfropfmischpolymerisates, aufgebaut aus 60 Gew.-Teilen vernetzter Pfropfgrundlage (98% Butylacrylat und 2% Dicyclopentadienylacrylat) und 40 Gew.-Teilen Hülle aus S/AN in 2 Stufen gepfropft (vgl. B auf Seite 11). Das Pfropfmischpolymerisat wies einen mittleren Teilchendurchmesser von 490 nm auf und besaß eine enge Verteilungsbreite (Q = 0,15).

b) 50 Gew.-% Styrol-Acrylnitril (65/35)-Copolymer (Viskositätszahl VZ = 80 ml/g, 0,5%ig in Dimethylformamid) (b₃) eingesetzt.

III. Als Komponenten C, D und E wurden die in der Beschreibung genannten Produkte Poly(pentabrombenzylacrylat) [=(C)], $Sb_2O_3$, 90%ig in Poly(ethylen) [=(D)] und die Produkte (E₁) und (E₂) angewendet.

Für Vergleichsversuche wurden eingesetzt:

IV. Ein dreifach gepfropfter Kautschuk nach der Lehre von (7) der Zusammensetzung: 60 Teile (90% Butylacrylat vernetzt mit 2% Dicyclopentadienylacrylat) und 10 Teile Styrol (1. Pfropfstufe) und 20 Teile (75% Styrol/25% Acrylnitril) (2. Pfropfstufe) und 10 Teile Methylmethacrylat (3. Pfropfstufe) [Teilchengröße 495 nm; Q = 0,12] in Abmischung mit 100 Teilen Styrol/Acrylnitril (65/35)-Copolymer (Viskositätszahl VZ = 80 ml/g, 0,5%ig in Dimethylformamid).

V. BC 52, ein bromiertes Oligo(carbonat) von Great Lakes mit einem Bromgehalt von 52 Gew.-%, bezogen auf BC 52.

VI. BC 58, ein bromiertes Oligo(carbonat) von Great Lakes mit einem Bromgehalt von 58 Gew.-%, bezogen auf BC 52.

VII. $Sb_2O_3$, 75%ig in Styrol/Acrylnitril (65/35)-Copolymer (Viskositätszahl VZ = 80 ml/g, 0,5%ig in Dimethylformamid.

VIII. Poly(methylmethacrylat), ®Degalan P 7 von Degussa.

Beispiele 1 und 2 und Vergleichsversuche A bis M

Die in der Tabelle angegebenen Teile der Komponenten A bis E wurden auf einem Mischextruder bei 260°C aufgeschmolzen, gemischt und anschießend granuliert.

Aus den Mischungen wurden bei 250°C mittels einer Spritzgußmaschine Prüfkörper hergestellt, an denen die in der Tabelle genannten Prüfungen durchgeführt wurden.

In der Tabelle werden folgende Abkürzungen verwendet:

| | | |
|---|---|---|
| A | = | Poly(carbonat) |
| B | = | ASA (Mischpolymerisat) |
| $b_1$ | = | Grundkautschuk [Poly(acrylat)] |
| $(b_1+b_2)$ | = | Pfropfmischpolymerisat [gepfropftes Poly(acrylat)] |
| $b_3$ | = | Hartmatrix (SAN) |
| C | = | Poly(pentabrombenzylacrylat) |
| D | = | $Sb_2O_3$, 90%ig in Poly(ethylen) |
| $E_1$ | = | Pluriol PE 3100 |
| $E_2$ | = | Tris(nonylphenyl)phosphit |
| $B_1$ | = | Mischpolymerisat aus 50 Teilen $b_3$) und 50 Teilen dreifach gepfropften Kautschuks (Zusammensetzung unter Punkt IV) |
| $C_1$ | = | BC 52 von Great Lakes |
| $C_2$ | = | BC 58 von Great Lakes |
| $D_1$ | = | $Sb_2O_3$, 75%ig in Styrol/Acrylnitril (65/35)-Copolymer (VZ = 80 ml/g, 0,5%ig in Dimethylformamid) |
| $E_3$ | = | Irganox PS 800 von Ciba Geigy |
| $E_4$ | = | Topanol CA von ICI |
| Z. | = | Zähbruch |
| S. | = | Sprödbruch |
| Z. O. | = | Zäh-Orientierungsbruch |
| PMMA | = | Degalan P 7 von Degussa |

Die Angaben bezüglich der Komponenten A, B, C und D in der Tabelle sind in Gew.-%, jeweils bezogen auf die Gesamtmenge aus A + B + C + D, angegeben. Die Angaben bezüglich der Komponente E beziehen sich stets auf Gew.-Teile an E pro 100 Gew.-Teile aus A + B + C + D.

### Tabelle: Beispiele und Vergleichsversuche

| Bei-spiel | Zusammensetzung in Gew.% | | | Komponenten | | | | E In Gew.-Teile auf 100 Teile aus A+B+C+D | |
|---|---|---|---|---|---|---|---|---|---|
| | A | B | davon b | $(b_1+b_2)$ | $b_3$ | C | D | | |
| 1 | 52,38 | 34,92 | 10,48 | 6,98 | 17,46 | 8 | 4 | $E_1$: 0,5 | $E_2$: 0,2 |
| 2 | 51,48 | 34,32 | 10,3 | 6,86 | 17,16 | 9 | 4,5 | $E_2$: 0,5 | $E_2$: 0,2 |
| Vergleichsversuche | | | | | | | | | |
| A | – | 85,42 | 25,63 | 17,08 | 42,71 | 10 | 4,5 | $E_3$: 0,05 | $E_4$: 0,03 |
| B | – | 73,92 | 22,17 | 14,79 | 36,96 | 20 | 6 | $E_3$: 0,05 | $E_4$: 0,03 |
| C | – | 74,42 | 22,32 | 14,89 | 37,21 | $C_1$: 19 | 6,5 | $E_3$: 0,05 | $E_4$: 0,03 |
| D | – | 79,42 | 23,82 | 15,89 | 39,71 | $C_2$: 16 | 4,5 | $E_1$: 0,05 | $E_2$: 0,03 |
| E | 51,18 | 34,12 | 10,23 | 6,83 | 17,06 | 9 | $D_1$: 5 | $E_1$: 0,5 | $E_2$: 0,2 |
| F | 50,16 | 33,44 | 10,03 | 6,64 | 16,72 | $C_1$: 11 | $D_1$: 4,7 | $E_1$: 0,5 | $E_2$: 0,2 |
| G | 50,16 | 33,44 | 10,03 | 6,64 | 16,72 | $C_2$: 11 | $D_1$: 4,7 | $E_1$: 0,5 | $E_2$: 0,2 |
| H | 50,88 | 33,92 | 10,17 | 6,79 | 16,96 | $C_1$: 10 | 4,5 | $E_1$: 0,5 | $E_2$: 0,2 |
| I | 50,88 | 33,92 | 10,17 | 6,79 | 16,96 | $C_2$: 10 | 4,5 | $E_1$: 0,5 | $E_2$: 0,2 |
| J | 50,88 | $B_1$: 33,92 | – | – | – | $C_1$: 10 | 4,5 | $E_1$: 0,5 | $E_2$: 0,2 |
| K | 50,88 | $B_1$: 33,92 | – | – | – | $C_2$: 10 | 4,5 | $E_1$: 0,5 | $E_2$: 0,2 |
| L | 49,08 | $B_1$: 32,72 + PMMA: 3 | – | – | – | $C_1$: 10 | 4,5 | $E_1$: 0,5 | $E_2$: 0,2 |
| M | 49,08 | $B_1$: 32,72 + PMMA: 3 | – | – | – | $C_2$: 10 | 4,5 | $E_1$: 0,5 | $E_2$: 0,2 |

### Tabelle: Fortsetzung

| Beispiel | UL 94 | | Wärmeform-beständigkeit nach Vicat (°C) | $a_k$ bei 23°C $(kJ/m^2)$ | $E_{Br}$ (Nm) | Bruchart |
|---|---|---|---|---|---|---|
| | 1" 8 | 1" 16 | | | | |
| 1 | V0 | V2 | 122 | 33 | 41 | Z. O. |
| 2 | V0 | V0 | 121 | 32 | 37 | Z. O. |
| Vergleichsversuche | | | | | | |
| A | keine | | 103 | 1,1 | 0,3 | S. |
| B | V2 | V2 | 105 | 1,6 | 0,7 | S. |
| C | V2 | V2 | 105 | 1,1 | 0,2 | S. |
| D | V2 | keine | 104 | 1,2 | 0,1 | S. |
| E | V2 | V2 | 117 | 15 | 4 | Z. O. |
| F | V2 | V2 | 118 | 4 | 20 | Z. |
| G | V2 | V2 | 119 | 7 | 1 | Z. O. |
| H | V0 | V2 | 120 | 10 | 27 | Z. |
| I | V0 | V2 | 117 | 12 | 29 | Z. O. |
| J | V0 | V2 | 118 | 29 | 35 | Z. |
| K | V0 | V2 | 119 | 13 | 27 | Z. O. |
| L | V2 | V2 | 119 | 30 | 38 | Z. |
| M | V0 | V2 | 120 | 17 | 29 | Z. O. |

**Patentansprüche**

1. Selbstverlöschende halogenhaltige thermoplastische Formmasse, enthaltend, jeweils bezogen auf die Formmasse aus A, B, C und D,

A mindestens 30 Gew.-% mindestens eines Polycarbonats,

B mindestens 20 Gew.-% mindestens eines Mischpolymerisats, das besteht aus

$b_1$) mindestens einem Elastomeren (Kautschuk) in einem Anteil von 1 bis 60 Gew.-%, bezogen auf B, wobei dieses Elastomere einpolymerisiert enthält, jeweils bezogen auf $b_1$)

$b_1a_1$) 50 bis 99,9 Gew.-% mindestens eines Alkylacrylates mit 1 bis 8 C-Atomen im Alkylrest,

$b_1a_2$) 0 bis 50 Gew.-% eines copolymerisierbaren Monomeren aus der Gruppe von Butadien, Isopren, Styrol, Acrylnitril und Vinylmethylether und deren Mischungen

und

$b_1a_3$) 0,1 bis 5 Gew.-% eines polyfunktionellen, vernetzend wirkenden Monomeren

$b_2$) einer durch sukzessive Polymerisation in ein oder höchstens zwei Verfahrensschritten auf das Elastomere gepfropften Hülle aus einem vinylaromatischen Monomeren mit 8 bis 12 C-Atomen und Acrylnitril im Gewichtsverhältnis 90:10 bis 60:40, wobei die Hülle 5 bis 40 Gew.-%, bezogen auf B, ausmacht,

sowie

$b_3$) mindestens einem Copolymerisat (Hartmatrix) aus einem vinylaromatischen Monomeren mit 8 bis 12 C-Atomen und Acrylnitril im Gewichtsverhältnis 90:10 bis 60:40, in einem Anteil von 20 bis 94 Gew.-%, bezogen auf B,

C 5 bis 15 Gew.-% mindestens einer Halogen enthaltenden organischen Verbindung (Flammschutzmittel),

D 2 bis 10 Gew.-% Antimonoxid (Synergist)

dadurch gekennzeichnet, daß als Flammschutzmittel C Poly(pentabrombenzylacrylat) mit einem Erweichungspunkt von 205 bis 215°C und als Synergist ein Konzentrat von $Sb_2O_3$ in Polyethylen mit 75 bis 95 Gew.-% $Sb_2O_3$ angewendet werden.

2. Selbstverlöschende halogenhaltige thermoplastische Formmasse gemäß Anspruch 1, worin

$b_1a_1$) 95 bis 99,9 Gew.-% mindestens eines Alkylacrylates mit 1 bis 8 C-Atomen im Alkylrest,

$b_2$) als vinylaromatisches Monomer Styrol enhält,

sowie

$b_3$) zu 50 bis 90 Gew.-% aus Styrol und 50 bis 10 Gew.-% aus Acrylnitril besteht.

3. Selbstverlöschende halogenhaltige themoplastische Formmasse, bestehend aus, jeweils bezogen auf die Formmasse aus A, B, C und D,

A 40 bis 60 Gew.-% mindestens eines Polycarbonats,

B 30 bis 50 Gew.-% mindestens eines Mischpolymerisats auf Basis von ASA, das besteht aus

$b_1$) mindestens einem Elastomeren (Kautschuk) in einem Anteil von 10 bis 40 Gew.-%, bezogen auf B, wobei dieses Elastomere einpolymerisiert enthält, jeweils bezogen auf $b_1$)

$b_1a_1$) 95 bis 99,9 Gew.-% mindestens eines Alkylacrylates mit 1 bis 8 C-Atomen im Alkylrest,

und

$b_1a_3$) 0,1 bis 5 Gew.-% eines polyfunktionellen, vernetzend wirkenden Monomeren

$b_2$) einer auf das Elastomer gepfropften in höchstens zwei Verfahrensschritten erzeugten Hülle, die 15 bis 28 Gew.-%, bezogen auf B, ausmacht, und die Styrol und Acrylnitril im Gewichtsverhältnis 80:20 bis 60:40 einpolymerisiert enthält,

sowie

$b_3$) mindestens einem Copolymerisat (Hartmatrix) aus einem vinylaromatischen Monomeren mit 8 bis 12 C-Atomen und Acrylnitril im Gewichtsverhältnis 90:10 bis 60:40, in einem Anteil von 40 bis 70 Gew.-%, bezogen auf B,

C 5 bis 15 Gew.-% mindestens einer Brom enthaltenden organischen Verbindung (Flammschutzmittel),

D 2 bis 10 Gew.-% Antimonoxid (Synergist)

dadurch gekennzeichnet, daß als Flammschutzmittel C Poly(pentabrombenzylacrylat) mit einem Erweichungspunkt von 205 bis 215°C und als Synergist eine Konzentrat von $Sb_2O_3$ in Polyethylen mit 75 bis 95 Gew.-% $Sb_2O_3$ angewendet werden.

4. Formmasse nach Anspruch 1, dadurch gekennzeichnet, daß sie übliche Zusatzstoffe E aufweist.

5. Verwendung einer Formmasse gemäß Anspruch 1 zur Herstellung von Formteilen.

6. Formteile aus einer Formmasse gemäß Anspruch 1.

**Claims**

1. A self-extinguishing halogen-containing thermoplastic molding composition containing, in each case based on the molding composition composed of A, B, C and D,

A at least 30% by weight of at least one polycarbonate,

B at least 20% by weight of at least one copolymer consisting of

$b_1$) at least one elastomer (rubber) in a proportion of from 1 to 60% by weight, based on B, this elastomer containing in copolymerized form, in each case based on $b_1$),

$b_1a_1$) from 50 to 99.9% by weight of at least one alkyl acrylate of from 1 to 8 carbon atoms in the alkyl,

$b_1a_2$) from 0 to 50% by weight of a copolymerizable monomer from the group consisting of butadiene, isoprene, styrene, acrylonitrile and vinyl methyl ether and mixtures thereof and

$b_1a_3$) from 0.1 to 5% by weight of a polyfunctional crosslinking monomer,

$b_2$) a sheath of an aromatic vinyl monomer of from 8 to 12 carbon atoms and acrylonitrile in a weight ratio of from 90:10 to 60:40 grafted onto the elastomer by successive polymerization in one or at most two steps, the sheath accounting for from 5 to 40% by weight, based on B,

and

$b_3$) at least one copolymer (hard matrix) of an aromatic vinyl monomer of from 8 to 12 carbon atoms and acrylonitrile in a weight ratio of from 90:10 to 60:40 in a proportion of from 20 to 94% by weight, based on B,

C from 5 to 15% by weight of at least one halogen-containig organic compound (flameproofing agent), D from 2 to 10% by weight of antimony oxide (synergist) which comprises using as flameproofing agent C poly(pentabromobenzyl acrylate) having a softening point of from 201 to 215°C and as synergist a concentrate of $Sb_2O_3$ in polyethylene containing from 75 to 95% by weight of $Sb_2O_3$.

2. A self-extinguishing halogen-containing thermoplastic molding composition as claimed in claim 1, wherein

$b_1a_1$) is from 50 to 99.9% by weight of at least one alkyl acrylate of from 1 to 8 carbon atoms in the alkyl, the aromatic vinyl monomer of

$b_2$) is styrene

and

$b_3$) consists to an extent of from 50 to 90% by weight of styrene and from 50 to 10% by weight of acrylonitrile.

3. A self-extinguishing halogen-containing thermoplastic molding composition consisting of, in each case based on the molding composition composed of A, B, C and D,

A from 40 to 60% by weight of at least one polycarbonate,

B from 30 to 50% by weight of at least one copolymer based on ASA consisting of

$b_1$) at least one elastomer (rubber) in a proportion of from 10 to 40% by weight, based on B, this elastomer containing in copolymerized form, in each case based on $b_1$),

$b_1a_1$) from 50 to 99.9% by weight of at least one alkyl acrylate of from 1 to 8 carbon atoms in the alkyl, and

$b_1a_3$) from 0.1 to 5% by weight of a polyfunctional crosslinking monomer,

$b_2$) a sheath grafted onto the elastomer in at most two steps, this sheath accounting for from 15 to 28% by weight, based on B, and containing styrene and acrylonitrile in copolymerized form in a weight ratio of from 80:20 to 60:40, and

$b_3$) at least one copolymer (hard matrix) of an aromatic vinyl monomer of from 8 to 12 carbon atoms and acrylonitrile in a weight ratio of from 90:10 to 60:40 in a proportion of from 40 to 70% by weight, based on B,

C from 5 to 15% by weight of at least one bromine-containing organic compound (flameproofing agent), D from 2 to 10% by weight of antimony oxide (synergist), which comprises using as flameproofing agent C poly(pentabromobenzyl acrylate) having a softening point of from 205 to 215°C and as synergist a concentrate of $Sb_2O_3$ in polyethylene containing from 75 to 95% by weight of $Sb_2O_3$.

4. A molding composition as claimed in claim 1, which contains a customary additive E.

5. The use of a molding composition as claimed in claim 1 for producing a molding.

6. A molding from a molding composition as claimed in claim 1.

**Revendications**

1. Matière à mouler thermoplastique auto-extinguible, contenant des halogènes, dans laquelle sont contenus (pourcentages par rapport à la somme de A, B, C et D):

A au moins 30% en poids d'au moins un polycarbonate,

B au moins 20% en poids d'au moins un polymère mixte, formé de

$b_1$) au moins un élastomère (caoutchouc) en une proportion de 1 à 60% en poids par rapport à B, cet élastomère contenant à l'état copolymérisé, par rapport à $b_1$):

$b_1a_1$) 50 à 99,9% en poids d'au moins un acrylate d'un alkyle en $C_1$ à $C_8$,

$b_1a_2$) 0 à 50% en poids d'un monomère copolymérisable choisi parmi le butadiène, l'isoprène, le styrène, l'acrylonotrile et l'éther vinyl-méthylique et des mélanges de ceux-ci, et

$b_1a_3$) 0,1 à 5% en poids d'un monomère polyfonctionnel, agissant comme agent de réticulation,

$b_2$) une enveloppe en un monomère vinyl-aromatique en $C_8$ à $C_{12}$ et en acrylonitrile dans un rapport pondéral de 90:10 à 60:40, greffée sur l'élastomère par des polymérisations successives en un seul ou tout au plus deux stades réactionnels, cette enveloppe constituant 5 à 40% du poids de B, ainsi que

b₃) au moins un copolymère (matrice rigide) en un monomère vinyl-aromatique en $C_8$ à $C_{12}$ et en acrylonitrile dans un rapport pondéral de 90:10 à 60:40 et en une proportion de 20 à 94% du poids de B,

C 5 à 15% en poids d'un composé organique halogéné (retardateur de combustion) D 2 à 10% en poids d'oxyde d'antimoine (agent de potentialisation), caractérisé en ce que l'on emploie comme retardateur de combustion C du poly(acrylate pentabrome-benzylique) avec un point de ramollissement entre 205 et 215°C et comme agent de potentialisation D un concentré de $Sb_2O_3$ dans du polyéthylène, contenant entre 75 et 95% en poids de $Sb_2O_3$.

2. Matière à mouler thermoplastique auto-extinguible, contenant des halogènes, suivant la revendication 1, contenant comme

b₁a₁) 50 à 99,9% en poids d'au moins un acrylate d'un alkyle en $C_1$ à $C_8$ et

comme monomère vinyl-aromatique

b₂) du styrène,

b₃) étant composé à raison de 50 à 90% en poids de styrène et de 50 à 10% en poids d'acrylonitrile.

3. Matière à mouler thermoplastique auto-extinguible, contenant des halogènes, comprenant (pourcentages par rapport à la somme de A, B, C et D):

A 40 à 60% en poids d'au moins un polycarbonate,

B 30 à 50% en poids d'au moins un polymère mixte à base d'un polymère ASA, formé de

b₁) au moins un élastomère (caoutchouc) en une proportion de 10 à 40% en poids par rapport à B, cet élastomère contenant à l'état copolymérisé, par rapport à b₁):

b₁a₁) 95 à 99,9% en poids d'au moins un acrylate d'un alkyle en $C_1$ à $C_8$ et

b₁a₃) 0,1 à 5% en poids d'un monomère polyfonctionnel, agissant comme agent de réticulation,

b₂) une enveloppe greffée en tout au plus deux stades réactionnels sur l'élastomère et dans laquelle sont copolymérisés du styrène et de l'acrylonitrile dans un rapport pondéral de 80:20 à 60:40, ainsi que de

b₃) au moins un copolymère (matrice rigide) en un monomère vinyl-aromatique en $C_8$ à $C_{12}$ et en acrylonitrile dans un rapport pondéral de 90:10 à 60:40 et en une proportion de 40 à 70% du poids de B,

C 5 à 15% en poids d'au moins un composé organique bromé (retardateur de combustion ) et D 2 à 10% en poids d'oxyde d'antimoine (agent de potentialisation), caractérisée en ce que l'on emploie comme retardateur de combustion C du poly(acrylate pentabromo-benzylique) avec un point de ramollissement de 205 à 215°C et comme agent de potentialisation un concentré de $Sb_2O_3$ dans du polyéthylène, contenant entre 75 et 95% en poids de $Sb_2O_3$.

4. Matière à mouler suivant la revendication 1, caractérisée en ce qu'elle contient des additifs usuels E.

5. Utilisation d'une matière à mouler suivant la revendication 1 pour la production de pièces moulées.

6. Pièces moulées en une matière à mouler suivant la revendication 1.